(19) Europäisches Patentamt
European Patent Office
Office européen des brevets

(11) Veröffentlichungsnummer: **0 112 497 B1**

(12) # EUROPÄISCHE PATENTSCHRIFT

(45) Veröffentlichungstag der Patentschrift: **26.02.86**

(51) Int. Cl.⁴: **C 07 F 9/32**, C 07 F 9/48

(21) Anmeldenummer: **83111652.0**

(22) Anmeldetag: **22.11.83**

(54) **Verfahren zur Herstellung von Alkanphosphonigsäureestern.**

(30) Priorität: **08.12.82 DE 3245365**

(43) Veröffentlichungstag der Anmeldung: **04.07.84 Patentblatt 84/27**

(45) Bekanntmachung des Hinweises auf die Patenterteilung: **26.02.86 Patentblatt 86/9**

(84) Benannte Vertragsstaaten: **AT BE CH DE FR GB IT LI NL**

(56) Entgegenhaltungen:
**DE - A - 2 415 757**
**DE - A - 2 519 192**

(73) Patentinhaber: **HOECHST AKTIENGESELLSCHAFT, Postfach 80 03 20, D-6230 Frankfurt am Main 80 (DE)**

(72) Erfinder: **Auer, Eberhard, Dr., Franz-Rüth-Strasse 12, D-5042 Erftstadt (DE)**
Erfinder: **Gehrmann, Klaus, Dr., Geschwister-Scholl-Strasse 31, D-5042 Erftstadt (DE)**
Erfinder: **Ohorodnik, Alexander, Dr., Kastanienweg 24, D-5042 Erftstadt (DE)**
Erfinder: **Rosenthal, Johannes, Dr., Remigiusstrasse 32, D-5000 Köln 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1986

**Beschreibung**

Die vorliegende Erfindung betrifft ein verbessertes Verfahren zur Herstellung von Alkanphosphonigsäureestern durch Umsetzung eines Alkyldihalogenphosphans mit einem aliphatischen Alkohol, wobei das Verfahrensprodukt in guter Ausbeute und hohem Reinheitsgrad erhalten wird.

Die technische Bedeutung der Alkanphosphonigsäureester basiert im wesentlichen auf deren Fähigkeit, sich katalytisch an Doppelbindungen zu einer Vielfalt von Verbindungen anzulagern, die besonders auf dem Pflanzenschutz- und Flammschutzgebiet Verwendung finden. Hierbei spielt die Reinheit der eingesetzten Ausgangsprodukte eine wichtige Rolle.

Es ist gemäß der DE-A-24 15 757 bekannt, Alkanphosphonigsäureester durch Umsetzung eines Alkyldichlorphosphans mit einem aliphatischen Alkohol entsprechend nachfolgender Gleichung 1

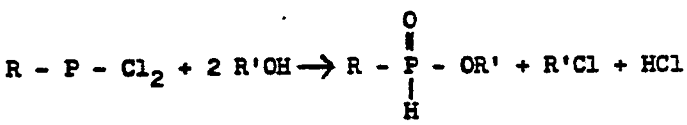 (1)

in welcher R und R' Alkylreste sind, derart herzustellen, daß man das Alkyldichlorphosphan und den aliphatischen Alkohol in einer Reaktionszone bei Temperaturen von 50 bis 200°C in Gegenwart von Stickstoff, Argon oder Kohlendioxid als Inertgas zum Sieden erhitzt, wobei der gebildete Halogenwasserstoff mit überschüssigem Alkohol in den oberen Teil der Reaktionszone destilliert, dort kondensiert und abgezogen wird, während der gebildete Alkanphosphonigsäureester, gegebenenfalls mit einem Überschuß an aliphatischem Alkohol, in den unteren Teil der Reaktionszone fließt und dort abgezogen wird.

Da der bei vorbeschriebener Umsetzung entstehende Halogenwasserstoff sowohl in dem aliphatischen Alkohol als auch in dem Alkanphosphonigsäureester gut löslich ist, läuft in einem gewissen Umfang die gemäß Gleichung 2 beschriebene unerwünschte Nebenreaktion ab:

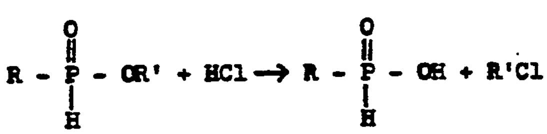 (2)

Diese Nebenreaktion ist aus folgenden Gründen nachteilig:

a) Sie verringert die Ausbeute an Phosphonigsäureester.

b) Es entsteht Alkanphosphonige Säure, die vor einer Weiterverwendung des Esters abgetrennt werden muß.

c) Die Alkanphosphonige Säure zerfällt bei höheren Temperaturen - quantitativ bei 180°C - in giftiges und selbstentzündliches Alkylphosphan und Alkanphosphonsäure entsprechend Gleichung 3:

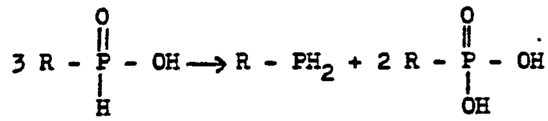 (3)

so daß bei der destillativen Reinigung des verunreinigten Alkanphosphonigsäureesters äußerste Vorsicht geboten ist. Ein ähnliches Verfahren wird in der DE-A- 2519192, insbesondere Beispiele 1 - 3, beschrieben.

Es wurde nunmehr gefunden, daß die vorgenannten Nachteile überwunden bzw. vermieden werden können, wenn man die Umsetzung des Alkyldihalogenphosphans mit dem aliphatischen

Alkohol in einer zweigeteilten Reaktionskolonne durchführt und dafür sorgt, daß der bei der Reaktion entstehende Halogenwasserstoff unveizüglich, gegebenenfalls zusammen mit überschüssigem aliphatischem Alkohol aus der Reaktionszone entfernt wird und dadurch ein längerer Kontakt des Halogenwasserstoffs mit dem Phosphonigsäureester verhindert wird.

Gegenstand der Erfindung ist ein Verfahren zur Herstellung von Alkanphosphonigsäureestern der allgemeinen Formel

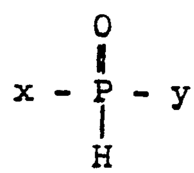

in welcher x eine Alkylgruppe mit 1-3 C-Atomen und y eine Alkoxygruppe mit 4-6 C-Atomen darstellen, wobei man ein Alkyldihalogenphosphan mit 1-3 C-Atomen im Alkylrest und einen aliphatischen Alkohol mit 4-6 C-Atomen in stöchiometrischem Uberschuß in eine Reaktionskolonne einleitet und bei einer Temperatur oberhalb der Siedepunkte der Reaktanden, jedoch unterhalb des Siedepunktes des entstehenden Alkanphosphonigsäureesters, zur Reaktion bringt; den im Sumpf der Reaktionskolonne anfallenden Alkanphosphonigsäureester abzieht und über Kopf der Reaktionskolonne kontinuierlich ein dampfförmiges Gemisch aus den bei der Reaktion gebildeten Nebenprodukten Halogenwasserstoff und Alkylhalogenid zusammen mit überschüssigem aliphatischem Alkohol abtreibt, welches dadurch gekennzeichnet ist, daß man das dampfförmige Gemisch in einer nachgeschalteten Bestillationskolonne auftrennt, wobei der im

Sumpf der Destillationskolonne anfallende aliphatische Alkohol in einem Umlaufverdampfer bei einer Temperatur von 100 bis 150°C von leichter als der aliphatische Alkoholsiedenden Verunreinigungen befreit und als gereinigter aliphatischer Alkohol in die Reaktionskolonne zurückgeleitet wird, während das als Kopfprodukt der Destillationskolonne abziehende Gemisch selektiv unter Gewinnung von Halogenwasserstoffgas und verflüssigtem Alkylhalogenid kondensiert wird.

Nach einer bevorzugten Ausführungsform des Verfahrens der Erfindung wird das Alkyldihalogenphosphan vor dem Einleiten in die Reaktionskolonne auf eine Temperatur von etwa 40 bis 85°C vorerwärmt. Weiterhin hat es sich als vorteilhaft erwiesen, in die Reaktionskolonne 2 bis 10 Mol Alkohol je Mol Alkyldihalogenphosphan einzuleiten.

Im Falle der Verwendung von Isobutanol als aliphatischem Alkohol beträgt die Reaktionstemperatur 108 bis 140°C.

Die erfindungsgemäße Arbeitsweise ermöglicht es im Gegensatz zu den bisher bekannten Herstellungsverfahren, den bei der Reaktion gebildeten Chlorwasserstoff auf einfache Art und Weise so vollständig von den Alkanphosphonigsäureestern zu entfernen, daß die nach Gleichung 2 ablaufende Nebenreaktion nicht eintreten kann, d.h. der hierbei erhaltene Ester ist frei von Alkanphoshonigsäure und kann ohne weitere Behandlung zur Addition an C = C - Doppelbindungen eingesetzt werden.

Alkanphosphonigsäureester die frei von Alkanphosphonigsäure sind, sind thermostabil und können daher ohne Schwierigkeiten bei Temperaturen von 180°C und mehr destillativ gereinigt werden.

Die Vorteile der erfindungsgemäßen Arbeitsweise werden durch die nachstehenden Beispiele in Verbindung mit der Zeichnung näher erläutert.

**Beispiel 1**

In die gemäß Zeichnung dargestellte Reaktionskolonne 1 wurden die Ausgangsprodukte Methyldichlorphosphan und Isobutanol kontinuierlich eingeleitet. Das Isobutanol wurde von dem Vorratsbehälter 2 über die Leitung 3 in einer Menge von 3,76 kg oder 50,81 Mol pro Stunde und das Methyldichlorphosphan von dem Vorratsbehälter 4 über den Vorerhitzer 5 und die Leitung 6 in einer Menge von 2,64 kg oder 22,56 Mol pro Stunde eindosiert, wobei sich in der Reaktionszone der Reaktionskolonne 1 eine Temperatur von 122°C einstellte.

Während der gebildete Methanphosphonigsäureisobutylester aus der Reaktionskolonne 1 über die Kreislaufleitung 7 in den auf 188°C eingestellten Umlaufverdampfer 9 ablief, strömte über Kopf der Reaktionskolonne 1 und Leitung 10 ein Dampfgemisch aus Isobutanol, Isobutylchlorid und Chlorwasserstoff in die Destillationskolonne 11, wo das Gemisch bei einem Rücklaufverhältnis von 10: 1 in flüssiges Isobutanol als Sumpfprodukt und Isobutylchlorid und Chlorwasserstoff als Kopfprodukt getrennt wurde. Das Kopfprodukt wurde bei einer Temperatur von 68 - 70°C über die Leitung 12 abgezogen, in dem Kondensator 13 das Isobutylchlorid verflüssigt und in dem Vorratsbehälter 14 gesammelt von wo das Isobutylchlorid entweder über die Leitung 15 in einer Menge von 2,32 kg pro Stunde entnommen oder zur Rückflußbildung über die Leitung 16 in die Destillationskolonne 11 zurückgeleitet wurde. Das nichtkondensierte Chlorwasserstoffgas wurde über die Leitung 17 abgezogen.

Das im Sumpf der Destillationskolonne 11 anfallende Isobutanol wurde durch Kreislaufführung über die Leitung 18 im Umlaufverdampfer 19 von restlichem Chlorwasserstoffgas entgast und in einer Menge von 16-18 1 pro Stunde über die Leitung 20 in die Reaktionskolonne 1 zurückgepumpt. Aus letzterer wurden stündlich über die Leitung 8 3,28 kg Methanphosphonigsäureisobutylester als Rohprodukt mit einem Estergehalt von 93,3 % entnommen. Die Ausbeute an reinem Ester betrug 99,7 % der Theorie. Der undestillierbare Rückstand des erhaltenen Verfahrensproduktes betrug weniger als 0,2 Gew%.

**Beispiel 2** (Vergleichsbeispiel)

In einer gemäß Beispiel 1 der deutschen Patentschrift 24 15 757 erläuterten Apparatur, bestehend aus einer 4 m langen Kolonne von 80 mm lichter Weite wurden nach Erreichen konstanter Bedingungen,d.h. einer Verdampfertemperatur von 135°C und einer Kopftemperatur von 95°C stündlich 2,64 kg Methyldichlorphosphan und 5,93 kg i-Butanol umgesetzt. Aus dem Verdampfer wurden stündlich 4,76 kg Sumpf abgezogen, der nach einer gaschromatographischen Analyse 62,5 % Methanphosphonigsäureisobutylester enthielt. Das entspricht einer Ausbeute von 97,1 %.

Eine Destillationsanalyse ergab, daß das Produkt 1,4 % undestillierbaren Rückstand enthielt.

**Beispiel 3**

Es wurde analog Beispiel 1 verfahren, wobei jedoch anstelle von Methyldichlorphosphan eine äquivalente Menge Ethyldichlorphosphan mit Isobutanol umgesetzt wurde. Es wurden auf diese Weise stündlich 3,69 kg Ethanphosphonigsäureisobutylester, der nach gaschromatographischer Analyse 91,2 %ig ist erhalten was einer Ausbeute von 99,4 % der Theorie entspricht.

**Patentansprüche:**

1. Verfahren zur Herstellung von Alkanphosphonigsäureestern der allgemeinen Formel

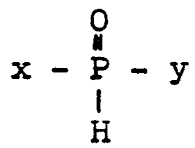

in welcher x eine Alkylgruppe mit 1-3 C-Atomen und y eine Alkoxygruppe mit 4-6 C-Atomen darstellen, wobei man ein Alkyldihalogenphosphan mit 1-3 C-Atomen im Alkylrest und einen aliphatischen Alkohol mit 4-6 C-Atomen in stöchiometrischem Überschuß in eine Reaktionskolonne einleitet und bei einer Temperatur oberhalb der Siedepunkte der Reaktanden, jedoch unterhalb des Siedepunktes des entstehenden Alkanphosphonigsäureesters, zur Reaktion bringt, den im Sumpf der Reaktionskolonne anfallenden Alkanphosphonigsäureester abzieht und über Kopf der Reaktionskolonne kontinuierlich ein dampfförmiges Gemisch aus den bei der Reaktion gebildeten Nebenprodukten Halogenwasserstoff und Alkylhalogenid zusammen mit überschüssigem aliphatischem Alkohol abtreibt, dadurch gekennzeichnet, daß man das dampfförmige Gemisch in einer nachgeschalteten Destillationskolonne auftrennt, wobei der im Sumpf der Destillationskolonne anfallende aliphatische Alkohol in einem Umlaufverdampfer bei einer Temperatur von 100 bis 150°C von leichter als der aliphatische Alkohol siedenden Verunreinigungen befreit und als gereinigter aliphatischer Alkohol in die Reaktionskolonne zurückgeleitet wird, während das als Kopfprodukt der Bestillationskolonne abziehende Gemisch selektiv unter Gewinnung von Halogenwasserstoffgas und verflüssigtem Alkylhalogenid kondensiert wird.

2. Verfahren nach Anspruch 1, dadurch gekennzeichnet, daß man das Alkyldihalogenphosphan vor dem Einleiten in die Reaktionskolonne auf eine Temperatur von etwa 40 bis 85°C vorerwärmt.

3. Verfahren nach Anspruch 1 oder 2, dadurch gekennzeichnet, daß man in die Reaktionskolonne 2 bis 10 Mol Alkohol je Mol Alkyldihalogenphosphan einleitet.

**Claims**

1. Process for making alkanephosphonous acid esters of the generel formula

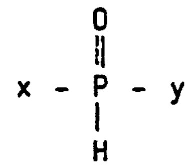

in which x stands for an alkyl group having from 1 to 3 carbon atoms and y stands for an alkoxy group having from 4 to 8 carbon atoms, wherein an alkyldihalogenophosphane containing from i to 3 carbon atoms in the alkyl group and an aliphatic alcohol having from 4 to 6 carbon atoms are introduced in stoichiometric excess into a resction column and rescted therein at a temperature higher than the boiling point of the resctants, but lower than the boiling point of the resulting alkanephosphonous acid ester; the alkanephosphonous acid ester obtained in the still of the reaction column is removed and a vaporous mixture consisting of the by-products formed during the reaction hydrogen halide and alkyl halide is continuously expelled overhead together with aliphatic alcohol in excess, which comprises. separating the vaporous mixture into its components in a series-connected distilling column, the aliphatic alcohol obtained in the still of the distilling column is freed, in a circulation evaporator at a temperature of 100 to 150°C, from contaminants boiling at a lower temperature than tha aliphatic alcohol and recycled, as purified aliphatic alcohol, into the reaction column, whereas the mixture issuing from the distillation column overhead is selectively condansed with recovery of hydrogen halide gas and liquefied alkyl halide.

2. Process es claimed in claim 1, wherein the alkyldihalogenophosphene is preheated to a temperature of about 40 to 85°C prior to introducing it into tha reaction column.

3. Process as claimed in claim 1 or 2, wherein 2 to 10 mols alcohol per mol alkyldihalogenophosphane are introduced into the reaction column.

**Revendications**

1. Procédé de préparation d'esters d'acides alcanephosphoneux de formule générale

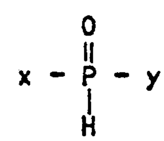

dans laquelle x représente un groupe alkyle en $C_1$-$C_3$ et y représente un groupe alcoxy en $C_4$-$C_6$, selon lequel on introduit une alkyldihalogénophosphine en $C_1$-$C_3$ dans le groupe alkyle et un alcool aliphatique en $C_4$-$C_6$ en excès stoechiométrique dans une colonne de réaction et on les fait réagir à une température

supérieure aux points d'ébullition des réactifs, mais inférieure au point d'ébullition de l'ester alcanephosphoneux se formant; selon lequel on retire l'ester alcanephosphoneux obtenu au pied de la colonne de réaction, et on chasse en continu, en tête de colonne de réaction, un mélange gazeux constitué par les sous-produits formés pendant la réaction gaz halohydrique et halogénure d'alkyle, conjointement avec l'alcool aliphatique en excès, caractérisé en ce que l'on sépare le mélange gazeux en ses constituants dans une colonne de distillation placée à la suite, l'alcool aliphatique obtenu au pied de la colonne de distillation étant débarrassé dans un évaporateur à circulation à une température de 100-150°C des impuretés bouillant à une température plus faible que l'alcool aliphatique et renvoyé comme alcool aliphatique purifié dans la colonne de réaction, tandis que le mélange passant en tête de la colonne de distillation est soumis à une condensation sélective avec récupération de gaz halohydrique et d'halogénure d'alkyle liquéfié.

2. Procédé selon la revendication 1, caractérisé en ce que l'on préchauffe l'alkyldihalogénophosphine à une température d'environ 40 à 85°C avant de l'introduire dans la colonne de réaction.

3. Procédé selon la revendication 1 ou 2, caractérisé en ce que l'on introduit dans la colonne de réaction 2 à 10 moles d'alcool par mole d'alkyldihalogénophosphine.

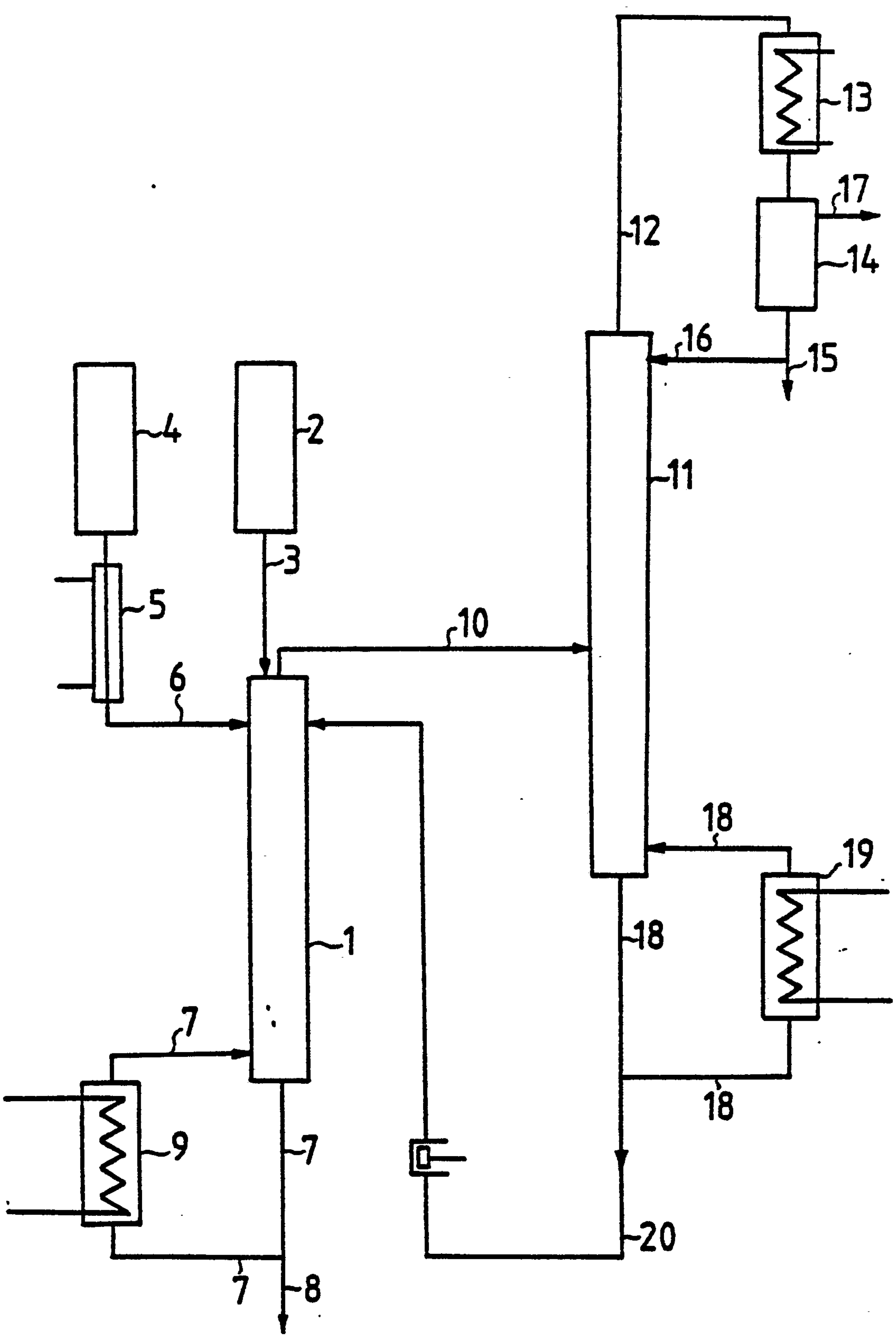
13
17
12
14
16
15
4
2
11
3
5
10
6
18
19
1
18
7
18
9
7
20
7
8